# EUROPÄISCHE PATENTSCHRIFT

(11) **EP 3 450 036 B1**
(45) Veröffentlichungstag und Bekanntmachung des Hinweises auf die Patenterteilung: **16.11.2022**
(21) Anmeldenummer: 18160901.7
(22) Anmeldetag: 09.03.2018
(51) Int. Cl.: B08B 9/20, B65G 47/68, B65G 47/71

(54) **BEHÄLTERZULAUF FÜR EINE BEHÄLTERREINIGUNGSMASCHINE**
CONTAINER SUPPLY FOR A CONTAINER-CLEANING MACHINE
DISPOSITIF D'AMENÉE DE RÉCIPIENTS POUR UNE MACHINE DE NETTOYAGE DE RÉCIPIENTS

(30) Priorität: 04.09.2017 DE 102017215478
(43) Veröffentlichungstag der Anmeldung: 06.03.2019
(73) Patentinhaber: Krones AG, 93073 Neutraubling (DE)
(72) Erfinder: Hansen, Denny, 93073 Neutraubling (DE); Koch, Uwe, 93073 Neutraubling (DE)
(74) Vertreter: Grünecker Patent- und Rechtsanwälte PartG mbB

(56) Entgegenhaltungen:
- EP-A2- 1 700 643
- DE-B- 1 009 517
- FR-A1- 2 476 614
- GB-A- 737 173
- JP-U- S49 956

## Beschreibung

Die Erfindung betrifft einen Behälterzulauf für eine Behälterreinigungsmaschine und ein Verfahren zum Zuführen von Behältern in Einschubgassen eines Behälterzulaufs.

Aus der EP 3 097 989 A1 ist eine Vorrichtung und ein Verfahren zum Transportieren von Mehrwegbehältern in Behälterzellen einer Reinigungsmaschine bekannt. Im Behälterzulauf werden die Behälter von Einschubbänder an Einschubtransporteure mit um eine horizontale Achse drehbaren Mitnehmern übergeben, die die Behälterböden abstützen, die Behälter entlang einer schräg ansteigenden und sich nach oben hin abflachenden Führungskurve anheben so in eine liegende Stellung zur Übergabe in die Behälterzellen bringen. In den Behälterzellen werden die Behälter anschließend auf bekannte Weise gereinigt. Die Einschubbänder sind seitlich durch Behälterführungen voneinander getrennt.

Es ist ferner bekannt, die Behälter auf einem Drängeltisch mit orthogonal zu den Einschubbändern verlaufenden Zuförderbändern bereitzustellen und von dort über ein Überschubblech auf die Einschubbänder und in zugeordnete Einschubgassen zu drängen. Zur gleichmäßigen Verteilung der Behälter sind eingangsseitig zwischen den Einschubbändern längs bewegliche Schwerter oder dergleichen vorhanden, um die Behälter am Eingang der Einschubgassen in Bewegung zu versetzen. Dieser Mechanismus führt jedoch zu einer unerwünschten Geräuschentwicklung der aneinander stoßenden Behälter und zu mechanischem Verschleiß.

Im Anschluss an die beweglichen Schwerter verlaufen die Seitenwände der Einschubgassen abknickend, sodass sich umgefallene Behälter dort verkeilen und den Bereich der an die Einschubgassen anschließenden Mitnehmer nicht erreichen können. Die verkeilten Behälter müssen von Bedienpersonal vom Behälterzulauf aus entnommen werden. Anschließend wird die Einschubgasse wieder ordnungsgemäß beschickt. Die umgefallenen Behälter sind jedoch für Bedienpersonal über den Drängeltisch und die beweglichen Schwerter hinweg nur schwer zu erreichen.

Die EP 1 700 643 A2 offenbart einen Einlaufbereich einer Reinigungsmaschine für Flaschen, wobei Zuförderbänder zunächst schräg bezüglich erster Einschubbänder und dann kurvenförmig verlaufen, sodass die ersten Einschubbänder nach dem kurvenförmigen Verlauf im Bereich von Einschubgassen bündig an die Zuförderbänder anschließen. Die Einschubgassen sind mittels wellenförmig verlaufender Führungsgeländer voneinander getrennt.

Zwischen den Zuförderbändern und den ersten Einschubbändern sind zudem zweite Einschubbänder vorhanden, die im kurvenförmigen Verlauf der Zuförderbänder zwischen diesen beginnen und nach der Kurve parallel verlaufen, und zwar zunächst zwischen den Zuförderbändern und schließlich zwischen den ersten Einschubbändern. Lücken zwischen den Zuförderbändern und den zweiten Einschubbändern sind durch stationäre Überschubbleche geschlossen.

Die DE 1 009 517 offenbart ferner einen Einlaufbereich einer Reinigungsmaschine mit einem Zuförderband und einer daneben bündig anschließenden Transferschiene, die in und entgegen der Transportrichtung des Zuförderbands oszilliert. Daran schließen sich Einschubgassen an, die durch orthogonal zur Transferschiene ausgerichtete und geradlinige Behälterführungen voneinander getrennt sind. Der Boden der Einschubgassen ist vorzugsweise feststehend, kann aber auch als Wanderrost ausgebildet sein.

Es besteht daher der Bedarf für einen Behälterzulauf einer Behälterreinigungsmaschine, der mit geringerer Geräuschentwicklung arbeitet und/oder eine einfachere Entnahme umgefallener Behälter aus den Einschubgassen ermöglicht.

Die gestellte Aufgabe wird mit einem Behälterzulauf für eine Behälterreinigungsmaschine gemäß Anspruch 1 gelöst. Demnach umfasst der Behälterzulauf wenigstens ein Zuförderband, ein dazu paralleles und optional gegenläufig bewegbares Transferband, eine Reihe daran orthogonal anschließender Einschubbänder und oberhalb der Einschubbänder angeordnete Behälterführungen, die Einschubgassen für die Behälter voneinander trennen. Ferner erstrecken sich wenigstens einige der Behälterführungen eingangsseitig bis an/in einen Überschubbereich zwischen dem Transferband und den Einschubbändern.

Die optional gegenläufige oder auch wiederholt umkehrende Bewegung des Transferbands erzeugt eine vergleichsweise sanfte Bewegung der Behälter zu den sich in/an den Überschubbereich erstreckenden Behälterführungen. Die Behälter können dann beispielsweise seitlich an den Behälterführungen abrollen und werden somit schonend und geräuscharm auf die Einschubgassen verteilt.

Sind zwischen den sich bis an/in den Überschubbereich erstreckenden Behälterführungen eingangsseitig kürzere Behälterführungen vorhanden, die sich nicht bis an/in den Überschubbereich erstrecken, so ermöglichen die eingangsseitig längeren Behälterführungen eine Grobverteilung der Behälter auf Gruppen von Einschubgassen und die eingangsseitig kürzeren Behälterführungen eine anschließende Feinverteilung der Behälter innerhalb der Gruppen auf die einzelnen Einschubgassen.

Vorzugsweise wechseln sich eingangsseitig längere und kürzere Behälterführungen im Verhältnis 1:1, 1:2 oder 1:3 ab. Anders gesagt, erstreckt sich dann nur jede zweite, dritte oder vierte Behälterführung bis zum Überschubbereich. Dadurch lässt sich eine besonders einfache und schonende Verteilung der Behälter bewirken, insbesondere durch Grobverteilung der Behälter auf Gruppen von je zwei oder drei Einschubgassen und anschließende Feinverteilung der Behälter auf die einzelnen Einschubgassen.

Vorzugsweise weisen dann dazwischenliegende, eingangsseitig kürzere Behälterführungen einen eingangsseitigen Abstand von bis zu 10 cm, insbesondere von 1 bis 10 cm, vom Überschubbereich auf. Dies erleichtert eine Grobverteilung der Behälter auf Gruppen von Einschubgassen und ermöglicht eine schonende Feinverteilung der Behälter innerhalb der Gruppen.

Erfindungsgemäß verlaufen die Behälterführungen eingangsseitig schräg über die Einschubbänder. Die Behälterführungen verlaufen dann vorzugsweise schräg entgegengesetzt zur Transportrichtung des Transferbands von diesem weg. Dadurch lassen sich die Behälter besonders schonend und gleichmäßig mit Hilfe des Transferbands auf die Gruppen von Einschubgassen bzw. die einzelnen Einschubgassen verteilen.

Vorzugsweise umfassen die Einschubgassen einen Abschnitt mit mehrfach abknickendem Verlauf zur Änderung der Transportrichtung ordnungsgemäß stehender Behälter und zur Blockierung umgefallener / liegender Behälter. Liegende Behälter verkeilen sich dort zwischen den Behälterführungen, sodass diese Behälter nicht zum Ausgangsbereich der Einschubgassen und zu den anschließenden Einschubtransporteuren transportiert werden. Beschädigungen am Einschubtransporteur lassen sich dadurch zuverlässig vermeiden.

Vorzugsweise weisen die Behälterführungen wenigstens einen ersten, und insbesondere ferner einen zweiten, über der eingangsseitigen Hälfte der Einschubbänder liegenden Knick zur Blockierung umgefallener / liegender Behälter auf. Folglich verkeilen sich liegende Behälter bereits in der eingangsseitigen Hälfte der Einschubbänder und sind dort von Bedienpersonal ergonomisch zu entnehmen.

Vorzugsweise weisen die Behälterführungen fest montierte Eingangssegmente und Ausgangssegmente auf sowie dazwischen einsetzbare Wechselsegmente zur Anpassung der Einschubgassen an unterschiedliche Behälterformate.

Die lichte Weite und die Abstände zwischen den Eingangssegmenten und Ausgangssegmenten sind dann vorzugsweise fest an die jeweils stromaufwärts und stromabwärts anschließenden Transporteinrichtungen angepasst. Dazwischen können sowohl der abknickende Verlauf als auch die lichte Weite der Einschubgassen jederzeit an unterschiedliche Behälterformate flexibel und einfach angepasst werden. Dies gilt sowohl für einen zuverlässigen Einschub ordnungsgemäß stehender Behälter als auch für eine Blockierung nicht ordnungsgemäß liegender Behälter.

Vorzugsweise weisen die Wechselsegmente wenigstens einen Knick zur Änderung der Transportrichtung auf. Entsprechend dient dieser Knick dann auch zur Blockierung nicht ordnungsgemäß liegender Behälter. Somit lässt sich Transport und Blockierung besonders flexibel an unterschiedliche Behälterformate anpassen.

Vorzugsweise schließen die Wechselsegmente an einem Knick zur Änderung der Transportrichtung an fest montierte Eingangssegmente an. Dies ermöglicht eine platzsparende und einfache Konfiguration eines eingangsseitigen Knicks sowohl hinsichtlich der Befestigung der Wechselsegmente als auch hinsichtlich einer ergonomischen Entnahme umgefallener Behälter.

Knick und abknickender Verlauf sind primär hinsichtlich der Transportfunktion definiert, insbesondere hinsichtlich der dort bewirkten Änderung der Transportrichtung und/oder Blockierung des Transports. Hierfür sind Behälterführungen mit schräg aneinander stoßenden Wandbereichen besonders vorteilhaft. Aber auch Knicke mit Krümmungsradien von beispielsweise nicht mehr als 10 mm sind denkbar.

Vorzugsweise sind die Behälterführungen im Produktionsbetrieb unbeweglich. Darunter ist zu verstehen, dass die Behälterführungen dabei weder gerüttelt noch geschwenkt und/oder verschoben werden. Somit lässt sich der Eingangsbereich der Einschubgassen konstruktiv besonders einfach, zuverlässig und platzsparend ausbilden.

Vorzugsweise ist das Transferband, bezogen auf das Zuförderband, abwechselnd gleichläufig und gegenläufig reversierend bewegbar. Dadurch lässt sich die Verteilung der Behälter auf die Gruppen von Einschubgassen und/oder einzelne Einschubgassen optional weiter optimieren.

Vorzugsweise umfasst der Behälterzulauf dann ferner eine Steuerung zur Anpassung einer Umkehrweite des Transferbands insbesondere an eine lichte Weite zwischen den sich bis zum Überschubbereich erstreckenden, eingangsseitig längeren Behälterführungen. Beispielsweise oszilliert das Transferband dann, um die Behälter zwischen den eingangsseitig längeren Behälterführungen hin und her zu bewegen, um das gleichmäßige Verteilen der Behälter in die dazwischen liegenden Überschubgassen zu erleichtern. Es sind prinzipiell aber auch andere Umkehrweiten denkbar, die für bestimmte Behältertypen eine besonders geräuscharme und zuverlässige Aufteilung auf die Einschubgassen ermöglichen.

Vorzugsweise umfasst das Transferband eine zu einem Umkehrbereich der Einschubbänder und nach unten hin gefaste Scharnierbandkette und einen elektromotorischen Omega-Antrieb. Eine derartige Scharnierbandkette wird auch als Free-Flow-Band bezeichnet. Omega-Antriebe sind besonders zuverlässig und greifen beispielsweise gezahnt auf der Unterseite der Scharnierbandkette ein.

Die gestellte Aufgabe wird ebenso mit einer Behälterreinigungsmaschine gelöst, die den Behälterzulauf gemäß wenigstens einer der voranstehend beschriebenen Ausführungsformen umfasst. Eine derartige Behälterreinigungsmaschine umfasst beispielsweise eine Vielzahl beweglicher Behälterzellen, die vorzugsweise als Käfige für einzelne Glasflaschen ausgebildet sind, um diese für eine Mehrwegnutzung zu reinigen.

Vorzugsweise umfasst die Behälterreinigungsmaschine dann ferner an die Einschubgassen anschließende Einschubtransporteure zur Überführung der Behälter in eine liegende Stellung. In der liegenden Stellung lassen sich die Behälter auf einfache Weise in die Behälterzellen einführen.

Die gestellte Aufgabe wird ebenso mit einem Verfahren gemäß Anspruch 14 gelöst. Demnach dient dieses zum Zuführen von Behältern in Einschubgassen eines Behälterzulauf gemäß Anspruch 1, insbesondere einer Behälterreinigungsmaschine, wobei die Behälter auf wenigstens einem Zuförderband zulaufen und über ein dazu paralleles Transferband auf eine Reihe orthogonal anschließender Einschubbänder drängen, über denen Behälterführungen zur Abgrenzung der Einschubgassen voneinander angeordnet sind, wobei sich wenigstens einige der Behälterführungen eingangsseitig bis an/in einen Überschubbereich zwischen Transferband und Einschubbändern erstrecken, und wobei das Transferband in einem normalen Drängelbetrieb in einer der Zuförderrichtung des Zuförderbands entgegengesetzten Transportrichtung läuft und der Drängelbetrieb durch Lockerungsphasen automatisch unterbrochen wird, in denen die Transportrichtung jeweils wenigstens einmal umgekehrt wird.

Dadurch kann ein eingangsseitiges Verklemmen von Behältern, auch mit diesbezüglich kritischem Querschnitt, an den Behälterführungen vermieden und/oder beseitigt werden.

Vorzugsweise wird die Transportrichtung in den Lockerungsphasen jeweils wiederholt und insbesondere oszillierend umgekehrt. Dadurch können verklemmte Behälter durch Rütteln oder dergleichen mit vergleichsweise geringem Oszillationshub von einander gelöst und ein normaler Drängelbetrieb ermöglicht werden.

Vorzugsweise werden die Lockerungsphasen durch sensorisch erkanntes Verklemmen von Behältern an den Behälterführungen ausgelöst. Das Verklemmen kann beispielsweise bildgebend erkannt werden und die Lockerungsphase von der zugehörigen Steuerung somit ereignisabhängig ausgelöst werden.

Vorzugsweise werden die Lockerungsphasen automatisch in vorgegeben Zeitabständen in den Drängelbetrieb eingefügt, insbesondere mit einer relativen Dauer der Lockerungsphasen von 1 bis 20% bezogen auf die Zeitdauer des Drängelbetriebs. Dies ist eine apparative einfache Möglichkeit zur vorbeugenden Vermeidung von Störungen aufgrund verklemmter Behälter. Geeignete Zeitabstände und relative Zeitdauern lassen sich für unterschiedliche Behälterformate empirisch ermitteln und bei Formatwechseln programmiert aktivieren.

Eine bevorzugte Ausführungsform der Erfindung ist zeichnerisch dargestellt. Es zeigen:
- Fig. 1: eine schematische Draufsicht auf den Behälterzulauf einer Behälterreinigungsmaschine; und
- Fig. 2: eine schematische Vorderansicht des Behälterzulaufs mit dahinter angedeuteter Behälterreinigungsmaschine.

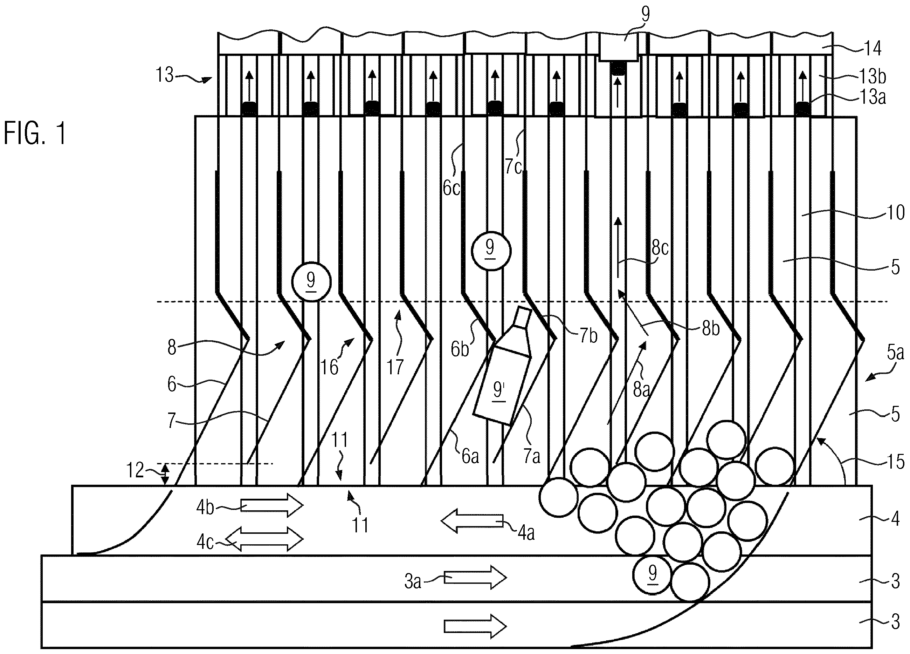

Wie die Fig. 1 erkennen lässt, umfasst der Behälterzulauf 1 für eine Behälterreinigungsmaschine 2 wenigstens ein Zuförderband 3, das hier beispielhaft in doppelter Ausführung und mit einer Zuförderrichtung 3a dargestellt ist, ein dazu paralleles und optional gegenläufig in einer ersten Transportrichtung 4a kontinuierlich bewegbares Transferband 4, und eine Reihe orthogonal daran anschließender Einschubbänder 5.

Das Transferband 4 ist optional ferner in einer dazu entgegengesetzten zweiten Transportrichtung 4b, also entsprechend der Zuförderrichtung 3a, und/oder in einer wiederholt umkehrenden dritten Transportrichtung 4c antreibbar.

Oberhalb der Einschubbänder 5 sind eingangsseitig längere Behälterführungen 6 und eingangsseitig kürzere Behälterführungen 7 angeordnet, die Einschubgassen 8 für zu reinigende Behälter 9 voneinander trennen. Zwischen den Einschubbändern sind Überschubbleche 10 angeordnet, die beispielsweise zur Befestigung der Behälterführungen 6, 7 dienen.

Wie die Fig. 1 ferner erkennen lässt, wechseln sich die eingangsseitig längeren Behälterführungen 6 mit den eingangsseitig kürzeren Behälterführungen 7 regelmäßig ab, hier beispielhaft im Verhältnis 1:1. Die eingangsseitig längeren Behälterführungen 6 erstrecken sich dann bis in/an einen Überschubbereich 11 zwischen dem Transferband 4 und den daran anschließenden Einschubbändern 5. Demgegenüber haben die kürzeren Behälterführungen 7 einen eingangsseitigen Abstand 12 von beispielsweise 2 bis 10 cm zum Überschubbereich 11.

Der Überschubbereich 11 kann auch als Tischlücke zwischen dem Transferband 4 und den dort umkehrenden und nach unten gekrümmten Einschubbändern 5 verstanden werden. Die Tischlücke wird mit Hilfe einer auf der Unterseite des Transferbands 4 zu den Einschubbändern 5 hin ausgebildeten Fase minimiert. Solche Transferbänder 4 sind als sogenannte Free-Flow-Bänder zum orthogonalen Anschluss an Transportbänder prinzipiell bekannt. Generell wird dadurch ein stufenloser Überschub der Behälter 9 auf die Einschubbänder 5 ermöglicht.

Die Behälterführungen 6, 7 umfassen jeweils fest montierte Eingangssegmente 6a, 7a und Ausgangssegmente 6c, 7c sowie dazwischen einsetzbare Wechselsegmente 6b, 7b. Die Wechselsegmente 6b, 7b können an bestimmte Behälterformate angepasst sein.

Die Einschubgassen 8 haben einen zweifach abknickenden Verlauf, sodass sich die Transportrichtung 8a ordnungsgemäß stehender Behälter 9 dort zuerst in eine Transportrichtung 8b und danach in eine Transportrichtung 8c ändert, wohingegen umgefallene und folglich liegende Behälter 9' sich dort verkeilen. Folglich können nur stehende Behälter 9 die Einschubgassen 8 vollständig passieren. Umgefallene Behälter 9' werden dagegen blockiert, so dass sie nachgeschaltete Einschubtransporteure 13 zum Zuführen der Behälter 9 in Behälterzellen 14 der Behälterreinigungsmaschine 2 nicht erreichen können.

Die Einschubtransporteure 13 umfassen beispielsweise an sich bekannte Mitnehmer 13a sowie ansteigende und sich nach oben hin abflachende Führungsschienen 13b für die Seitenwand der Behälter 9, um diese liegend an die Behälterzellen 14 zu übergeben.

Die Eingangssegmente 6a, 7a der Behälterführungen 6, 7 sind vorzugsweise unter einem Winkel 15 zum Transferband 4 schräg angeordnet. Hierbei verlaufen die Eingangssegmente 6a, 7a, vorzugsweise schräg entgegen der Transportrichtung 4a des Transferbands 4 von diesem weg.

Die Behälterführungen 6, 7 umfassen vorzugsweise wenigstens einen eingangsseitig ersten Knick 16 und einen dazu gegenläufigen zweiten Knick 17, sodass sich eine durch die Behälterführungen 6, 7 vorgegebene Transportrichtung 8a, 8b in den Einschubgassen 8 wenigstens zweimal ändert.

Zumindest der eingangsseitig erste Knick 16 ist oberhalb der eingangsseitigen Hälfte 5a der Einschubbänder 5 angeordnet. Besonders günstig ist es, wenn auch der zweite Knick 17 in der eingangsseitigen Hälfte 5a der Einschubbänder 5 liegt. Folglich verkeilen sich liegende Behälter 9' in der eingangsseitigen Hälfte 5a der Einschubbänder 5, also vergleichsweise nah am Transferband 4, und können dort ergonomisch entnommen werden.

Der eingangsseitig erste Knick 16 wird vorzugsweise vom Übergang des Eingangssegments 6a, 7a mit dem Wechselsegment 6b, 7b gebildet. Der zweite Knick 17 ist vorzugsweise innerhalb des Wechselsegments 6b, 7b ausgebildet und kann daher besonders einfach an das jeweilige Behälterformat angepasst werden. Zu diesem Zweck sind lediglich geeignete Wechselsegmente 6b, 7b zwischen die fest montierten Eingangssegmente 6a, 7a und Ausgangssegmente 6c, 7c einzusetzen.

Zur Verankerung eignet sich beispielsweise ein Formschluss. Zudem lässt sich ein Schenkel des ersten Knicks 16 durch Austausch der Wechselsegmente 6b, 7b verändern.

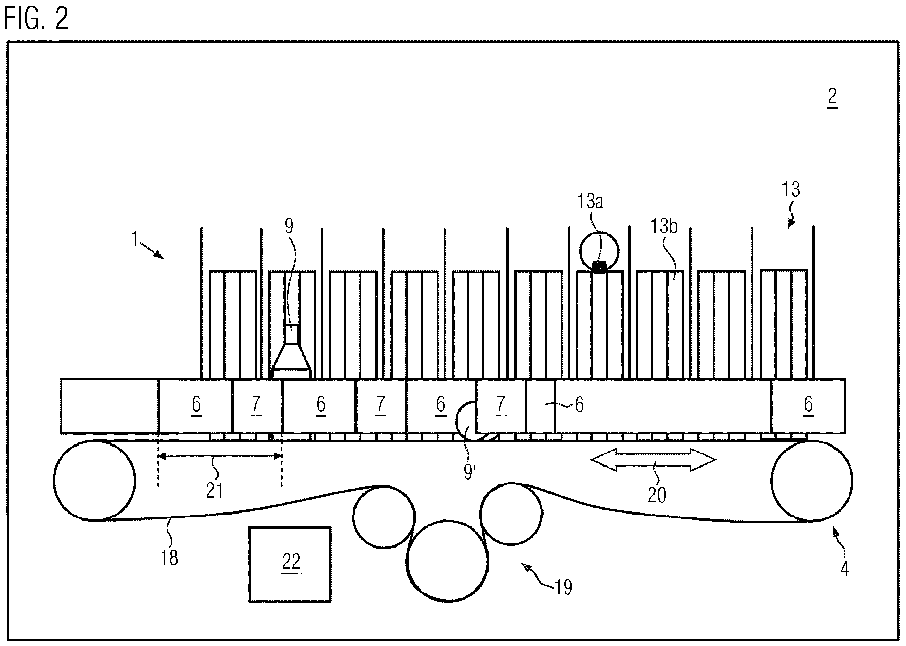

Wie die Fig. 2 schematisch erkennen lässt, sind die Behälterführungen 6, 7 vorzugsweise derart abknickend ausgebildet, dass es keine durchgängige Sichtachse vom Eingang bis zum Ausgang der Einschubgassen 8 gibt. Entsprechend ist ein hinter den Knicken 16, 17 ordnungsgemäß stehender Behälter 9 in der Fig. 2 von den Behälterführungen 6, 7 teilweise verdeckt, während ein umgefallener Behälter 9' von den Knicken 16, 17 blockiert wird vor diesen liegend dargestellt ist.

Das Transferband 4 ist vorzugsweise als Scharnierbandkette 18 mit elektromotorischem Omega-Antrieb 19 ausgebildet. Derartige Antriebe sind prinzipiell bekannt und besonders zuverlässig mit Scharnierbandketten 18 einsetzbar.

Der Omega-Antrieb 19 eignet sich aufgrund seiner elektromotorischen Arbeitsweise auch dazu, das Transferband 4 oszillierend, nämlich abwechseln in der normalen Transportrichtung 4a und dieser entgegengesetzt, also reversierend, anzutreiben. In der Fig. 2 ist hierzu beispielhaft eine Umkehrweite 20 des laufend reversierenden Transferbands 4 schematisch angedeutet. Die Umkehrweite 20 kann dann beispielsweise an eine lichte Weite 21 zwischen den sich bis zum Transferband 4 erstreckenden Behälterführungen 7 angepasst werden. Für den Omega-Antrieb 19 ist eine entsprechend programmierbare Steuerung 22 vorhanden.

Prinzipiell sind auch von der Darstellung abweichende Abfolgen von eingangsseitig längeren und kürzeren Behälterführungen 6, 7 möglich. Beispielsweise könnte nur jede dritte oder vierte Behälterführung 6 bis an den Überschubbereich 11 heranreichen. Ebenso sind die eingangsseitig kürzeren Behälterführungen 7 nicht zwingend notwendig.

Verschiedene Abfolgen von Behälterführungen 6, 7 sind sowohl bei durchgehend gegenläufigem Antrieb des Transferbands 4 denkbar als auch beim reversierenden Antrieb des Transferbands 4. Ebenso können beide Antriebsvarianten in einem vorgegebenen zeitlichen Schema wechseln.

Mit den eingangsseitig längeren Behälterführungen 6 können die Behälter 9 gegebenenfalls zuerst gruppiert und dann besonders schonend und geräuscharm auf die einzelnen Einschubgassen 8 verteilt werden.

Mit dem Behälterzulauf 1 kann beispielsweise wie folgt gearbeitet werden:
Die zu reinigenden Behälter 9, die insbesondere Mehrwegbehälter aus Glas oder Kunststoff sind, werden kontinuierlich von den Zuförderbändern 3 zugeführt, stauen sich darauf insbesondere in deren Endbereichen (beispielsweise an einem schematisch angedeuteten Führungsgeländer oder dergleichen) und drängen folglich zum Transferband 4. Auf diesem werden die Behälter 9 im normalen Drängelbetrieb gegenläufig in der ersten Transportrichtung 4a bewegt und daher ständig umverteilt. Dies begünstigt eine gleichmäßige Verteilung der Behälter 9 auf sämtliche Einschubgassen 8.

Mit Hilfe des Transferbands 4 werden die Behälter 9 in Bewegung gehalten und laufend an die bis an das Transferband 4 heran reichenden Behälterführungen 6 gedrückt, sodass die Behälter 9 dort mit vergleichsweise geringerer Transportgeschwindigkeit abrollen können. Dadurch werden die Behälter 9 sanft zu den Einschubgassen 8 geleitet, gegebenenfalls nach Kontaktieren und Abrollen an den eingangsseitig kürzeren Behälterführungen 7 in eine jeweils unmittelbar benachbarte Einschubgasse 8.

Aufgrund der vergleichsweise sanften Abrollbewegungen an den Behälterführungen 6, 7 erzeugen die Behälter 9 kaum Störgeräusche und werden zudem mechanisch geschont.

Die Behälter 9 werden hierbei ohne bewegte Führungselemente, wie beispielsweise oszillierende Schwerter oder dergleichen, auf die Einschubgassen 8 verteilt. Folglich können Transportbarrieren für liegende Behälter 9', insbesondere in Form der Knicke 16, 17, vergleichsweise nah am Überschubbereich 11 angeordnet werden. Somit ist ein insgesamt kompakter Behälterzulauf 1 möglich.

Im laufenden Betrieb können umgefallene Behälter 9' nach dem Verkeilen in den Einschubgassen 8 ergonomisch und schnell entnommen werden, wohingegen ordnungsgemäß stehende Behälter 9 zuverlässig durch die Einschubgassen 8 gefördert werden und danach zur Übergabe an die Behälterzellen 14 zur Verfügung stehen. Somit ist ein gleichermaßen zuverlässiger, effizienter und geräuscharmer Produktionsbetrieb der zugeordneten Behälterreinigungsmaschine 2 gegeben.

Der normale Drängelbetrieb wird vorzugsweise durch Lockerungsphasen wiederholt unterbrochen, die einem Verklemmen der Behälter 9 an den Eingangssegmenten 6a, 7a der Behälterführungen 6, 7 entgegenwirken und/oder dort bereits verklemmte Behälter 9 wieder mobilisieren.

Zu diesem Zweck wird die gegenläufige erste Transportrichtung 4a des Transportbands 4 pro Lockerungsphase wenigstens einmal in die zweite Transportrichtung 4b umgekehrt. Vorzugsweise wechseln sich die Transportrichtungen 4a, 4b während einer bestimmten Lockerungsphase mehrmals ab,

Denkbar ist auch eine Lockerungsphase mit einer wiederholt regelmäßig reversierenden Transportbewegung 4c, insbesondere einer derart oszillierenden Transportbewegung 4c.

In den Lockerungsphasen können die Transportbewegungen 4a, 4b, 4c zudem beliebig kombiniert werden.

Zeitdauer der Lockerungsphasen und zeitliche Abstände zwischen den Lockerungsphasen können ebenso an bestimmte Behälterformate angepasst werden wie die Art und Kombination der Transportbewegungen 4a, 4b, 4c in den Lockerungsphasen.

Ein Verklemmen diesbezüglich kritischer Behälterquerschnitte, wie beispielsweise bei nichtrunden Formflaschen, kann mit den Lockerungsphasen vermieden werden oder tritt zumindest seltener auf als bei durchgehendem Drängelbetrieb mit der ersten Transportrichtung 4a.

Die Lockerungsphasen können mit der programmierbaren Steuerung 22 sowohl periodisch in den normalen Drängelbetrieb eingefügt werden, beispielsweise anhand von Erfahrungswerten mit bestimmten Behälterformaten, und/oder sensorisch ausgelöst werden.

Beispielsweise könnte ein Verklemmen von Behältern 9 bildgebend erkannt werden und dies eine Lockerungsphase auslösen. Ebenso könnten im Bereich der Behälterführungen 6, 7 Drucksensoren, Spannungssensoren oder dergleichen vorhanden sein, die beispielsweise ein Verklemmen durch versuchtes Spreizen einzelner Einschubgassen 8 registrieren. Die Lockerungsphasen könnten entsprechend bei Wegfallen des auslösenden Ereignisses sensorisch beendet werden. Weiterhin kann eine Verklemmung durch die Feststellung des Belegungszustandes einer Einschubgasse bzw. eines jeweiligen Transportelements innerhalb der Reinigungsmaschine festgestellt werden. Der Belegungszustand kann beispielsweise durch optische bzw. bildgebende Verfahren oder durch Taster bzw. bewegliche Elemente im Transportweg / Transportelement bestimmt werden.

Somit können die Lockerungsphasen sowohl vorbeugend automatisch eingefügt werden als auch ereignisbedingt bei erkanntem Verklemmen bzw. unmittelbar drohendem Verklemmen von Behältern 9 automatisch ausgelöst werden.

## Patentansprüche

1. Behälterzulauf (1) für eine Behälterreinigungsmaschine (2), mit wenigstens einem Zuförderband (3) für Behälter (9), einem dazu parallelen und insbesondere gegenläufig bewegbaren Transferband (4), einer Reihe orthogonal daran anschließender Einschubbänder (5) und mit oberhalb der Einschubbänder (5) angeordneten Behälterführungen (6, 7), die Einschubgassen (8) für die Behälter (9) voneinander trennen, wobei sich wenigstens einige der Behälterführungen (6) eingangsseitig bis an/in einen Überschubbereich (11) zwischen Transferband (4) und Einschubbändern (5) erstrecken, wobei die Behälterführungen (6, 7) eingangsseitig schräg über die Einschubbänder (5) verlaufen.

2. Behälterzulauf nach Anspruch 1, wobei sich eingangsseitig längere und kürzere Behälterführungen (6, 7) im Verhältnis 1:1, 1:2 und/oder 1:3 abwechseln.

3. Behälterzulauf nach Anspruch 1 oder 2, wobei dazwischenliegende Behälterführungen (7) mit einem eingangsseitigen Abstand (12) von bis zu 10 cm vom Überschubbereich (11) angeordnet sind.

4. Behälterzulauf nach wenigstens einem der vorigen Ansprüche, wobei die Einschubgassen (8) einen mehrfach abknickenden Verlauf zur Änderung der Transportrichtung (8a, 8b, 8c) ordnungsgemäß stehender Behälter (9) und zur Blockierung liegender Behälter (9') aufweisen.

5. Behälterzulauf nach wenigstens einem der vorigen Ansprüche, wobei die Behälterführungen (6, 7) wenigstens einen ersten, und insbesondere ferner einen zweiten, über der eingangsseitigen Hälfte (5a) der Einschubbänder (5) liegenden Knick (16, 17) zur Blockierung liegender Behälter (9') aufweisen.

6. Behälterzulauf nach wenigstens einem der vorigen Ansprüche, wobei die Behälterführungen (6, 7) fest montierte Eingangssegmente (6a, 7a) und Ausgangssegmente (6c, 7c) aufweisen sowie dazwischen einsetzbare Wechselsegmente (6b, 7b) insbesondere zur Anpassung der Einschubgassen (8) an unterschiedliche Behälterformate.

7. Behälterzulauf nach Anspruch 6, wobei die Wechselsegmente (6b, 7b) wenigstens einen Knick (17) zur Änderung der Transportrichtung (8b, 8c) aufweisen.

8. Behälterzulauf nach Anspruch 7 oder 6, wobei die Wechselsegmente (6b, 7b) an einem Knick (16) zur Änderung der Transportrichtung (8a, 8b) an fest montierte Eingangssegmente (6a, 7a) anschließen.

9. Behälterzulauf nach wenigstens einem der vorigen Ansprüche, wobei die Behälterführungen (6, 7) im Produktionsbetrieb unbeweglich sind.

10. Behälterzulauf nach wenigstens einem der vorigen Ansprüche, wobei das Transferband (4), bezogen auf das Zuförderband (3), gleich- und gegenläufig reversierend bewegbar ist.

11. Behälterzulauf nach Anspruch 10, ferner mit einer Steuerung (22) zur Anpassung einer Umkehrweite (20) des Transferbands (4) an eine lichte Weite (21) zwischen den sich bis zum Überschubbereich (11) erstreckenden Behälterführungen (6).

12. Behälterzulauf nach wenigstens einem der vorigen Ansprüche, wobei das Transferband (4) eine zu den Einschubbändern (5) und nach unten hin gefaste Scharnierbandkette (18) und einen elektromotorischen Omega-Antrieb (19) umfasst.

13. Behälterreinigungsmaschine (2) mit dem Behälterzulauf (1) nach wenigstens einem der vorigen Ansprüche.

14. Verfahren zum Zuführen von Behältern (9) in Einschubgassen (8) eines Behälterzulaufs (1) nach Anspruch 1, insbesondere einer Behälterreinigungsmaschine (2), wobei die Behälter auf wenigstens einem Zuförderband (3) zulaufen und über ein dazu paralleles Transferband (4) auf eine Reihe orthogonal anschließender Einschubbänder (5) drängen, über denen Behälterführungen (6, 7) zur Abgrenzung der Einschubgassen (8) voneinander angeordnet sind, wobei sich wenigstens einige der Behälterführungen (6) eingangsseitig bis an/in einen Überschubbereich (11) zwischen Transferband (4) und Einschubbändern (5) erstrecken, und wobei das Transferband (4) in einem normalen Drängelbetrieb in einer der Zuförderrichtung (3a) des Zuförderbands (3) entgegengesetzten Transportrichtung (4a) läuft und der Drängelbetrieb durch Lockerungsphasen unterbrochen wird, in denen die Transportrichtung (4a) jeweils wenigstens einmal umgekehrt wird.

15. Verfahren nach Anspruch 14, wobei die Transportrichtung (4a) in den Lockerungsphasen jeweils wiederholt und insbesondere oszillierend umgekehrt wird.

16. Verfahren nach Anspruch 14 oder 15, wobei die Lockerungsphasen durch sensorisch erkanntes Verklemmen von Behältern (9) an den Behälterführungen (6, 7) ausgelöst werden.

17. Verfahren nach einem der Ansprüche 14 bis 16, wobei die Lockerungsphasen automatisch in vorgegeben Zeitabständen in den Drängelbetrieb eingefügt werden, insbesondere mit einer relativen Dauer der Lockerungsphasen von 1 bis 20%.

## Claims

1. A container inlet (1) for a container cleaning machine (2), comprising at least one supplying conveyor belt (3) for containers (9), a transfer belt (4) parallel thereto and in particular movable in an opposite direction, a row of infeed belts (5) orthogonally adjoining the transfer belt and including container guiding means (6, 7) are arranged above the infeed belts (5) and separate infeed tracks (8) for the containers (9) from each other, wherein at least some of the container guiding means (6) extend on the entrance side up to/into a changeover region (11) between the transfer belt (4) and infeed belts (5) and the container guiding means (6, 7) extend obliquely over the infeed belts (5) on the inlet side.

2. The container inlet according to claim 1, wherein longer and shorter container guiding means (6, 7) alternate on the inlet side in a ratio of 1:1, 1:2 and/or 1:3.

3. The container inlet according to claims 1 or 2, wherein intermediate container guiding means (7) are arranged with a distance on the entrance side (12) of up to 10 cm from the changeover region (11).

4. The container inlet according to at least one of the preceding claims, wherein the infeed tracks (8) have a course with multiple bends for changing the transport direction (8a, 8b, 8c) of properly standing containers (9) and for blocking lying containers (9').

5. The container inlet according to at least one of the preceding claims, wherein the container guiding means (6, 7) include at least a first, and in particular furthermore a second bend (16, 17) located above the one half (5a) of the insertion belts (5) on the entrance side for blocking lying containers (9').

6. The container inlet according to at least one of the preceding claims, wherein the container guiding means (6, 7) include fixedly mounted inlet segments (6a, 7a) and outlet segments (6c, 7c) as well as interchangeable segments (6b, 7b) insertable therebetween, in particular for adapting the infeed tracks (8) to different container formats.

7. The container inlet according to claim 6, wherein the interchangeable segments (6b, 7b) include at least one bend (17) for changing the transport direction (8b, 8c).

8. The container inlet according to claims 7 or 6, wherein the interchangeable segments (6b, 7b) are connected to fixedly mounted input segments (6a, 7a) at a bend (16) for changing the transport direction (8a, 8b).

9. The container inlet according to at least one of the preceding claims, wherein the container guiding means (6, 7) are stationary during the production process.

10. The container inlet according to at least one of the preceding claims, wherein the transfer belt (4) can be reversibly moved in the same and opposite directions with respect to the infeed belt (3).

11. The container inlet according to claim 10, further comprising control means (22) for adapting a reversal width (20) of the transfer belt (4) to a clear width (21) between the container guiding means (6) extending up to the changeover area (11).

12. The container inlet according to at least one of the preceding claims, wherein the transfer belt (4) comprises a slat-band chain (18) chamfered downward towards the infeed belts (5) and an electromotive omega drive (19).

13. A container cleaning machine (2) with the container inlet (1) according to at least one of the preceding claims.

14. A method for supplying containers (9) in infeed tracks (8) of a container inlet (1) according to claim 1, in particular of a container cleaning machine (2), wherein the containers are entering on at least one supplying conveyor belt (3) and are pushed via a transfer belt (4) parallel thereto onto a row of orthogonally adjoining infeed belts (5) above which container guiding means (6, 7) are arranged for separating the infeed tracks (8) from each other, wherein at least some of the container guiding means (6) extend on the entrance side up to/into a changeover region (11) between the transfer belt (4) and infeed belts (5) and wherein in a normal accumulation operation the transfer belt (4) runs in a transport direction (4a) opposite to the supplying direction (3a) of the supplying conveyor belt (3) and the accumulation operation is interrupted by separating phases in each of which the transport direction (4a) is reversed at least once.

15. The method according to claim 14, wherein in each of the separating phases the transport direction (4a) is repeatedly and in particular oscillatorily reversed.

16. Method according to claims 14 or 15, wherein the separating phases are triggered by jamming of containers (9) on the container guiding means (6, 7) detected by sensing means.

17. The method according to any one of claims 14 to 16, wherein the separating phases are automatically inserted into the accumulation operation at predetermined time intervals, in particular with a relative duration of the separating phases of 1 to 20%.

## Revendications

1. Alimentation de récipients (1) pour une machine de nettoyage de récipients (2), comprenant au moins une bande transporteuse (3) pour des récipients (9), une bande de transfert (4) parallèle à celle-ci et en particulier mobile en sens inverse, une série de bandes d'insertion (5) qui y sont raccordées orthogonalement et comprenant des guides de récipient (6, 7) disposés au-dessus des bandes d'insertion (5), qui séparent les voies d'insertion (8) pour les récipients (9) les unes des autres, au moins certains des guides de récipient (6) s'étendant à partir du côté de l'entrée jusqu'à/dans une zone de transmission (11) entre la bande de transfert (4) et les bandes d'insertion (5), les guides de récipient (6, 7) s'étendant à partir du côté de l'entrée obliquement sur les bandes d'insertion (5).

2. Alimentation de récipients selon la revendication 1, dans laquelle des guides de récipient (6, 7) plus longs et plus courts du côté de l'entrée alternent selon un rapport de 1:1, 1:2 et/ou 1:3.

3. Alimentation de récipients selon la revendication 1 ou 2, dans laquelle des guides de récipient (7) intermédiaires sont agencés à une distance (12) du côté de l'entrée allant jusqu'à 10 cm de la zone de transmission (11).

4. Alimentation de récipients selon au moins l'une des revendications précédentes, dans laquelle les voies d'insertion (8) présentent une trajectoire qui se plie plusieurs fois pour modifier la direction de transport (8a, 8b, 8c) des récipients (9) correctement placés verticalement et pour bloquer les récipients (9') couchés.

5. Alimentation de récipients selon au moins l'une quelconque des revendications précédentes, dans laquelle les guides de récipient (6, 7) présentent au moins un premier coude (16, 17), et en particulier un second coude (16, 17) situé au-dessus de la moitié côté entrée (5a) des bandes d'insertion (5), pour bloquer les récipients (9') couchés.

6. Alimentation de récipients selon au moins l'une des revendications précédentes, dans laquelle les guides de récipient (6, 7) présentent des segments d'entrée (6a, 7a) et des segments de sortie (6c, 7c) montés de manière fixe, ainsi que des segments interchangeables (6b, 7b) pouvant être insérés entre eux, en particulier pour adapter les voies d'insertion (8) à différents formats de récipients.

7. Alimentation de récipients selon la revendication 6, dans laquelle les segments interchangeables (6b, 7b) présentent au moins un coude (17) pour modifier la direction de transport (8b, 8c).

8. Alimentation de récipients selon la revendication 7 ou 6, dans laquelle les segments interchangeables (6b, 7b) se raccordent à un coude (16) pour modifier la direction de transport (8a, 8b) vers des segments d'entrée (6a, 7a) montés de manière fixe.

9. Alimentation de récipients selon au moins l'une des revendications précédentes, dans laquelle les guides de récipient (6, 7) sont immobiles en cours de production.

10. Alimentation de récipients selon au moins l'une quelconque des revendications précédentes, dans laquelle la bande de transfert (4) peut être déplacée de manière réversible dans le même sens et en sens inverse par rapport à la bande de transport (3).

11. Alimentation de récipients selon la revendication 10, comprenant en outre une commande (22) pour ajuster une largeur d'inversion (20) de la bande de transfert (4) à une largeur libre (21) entre les guides de récipient (6) s'étendant jusqu'à la zone de transmission (11).

12. Alimentation de récipients selon au moins l'une quelconque des revendications précédentes, dans laquelle la bande de transfert (4) comprend une chaîne de bande de charnière (18) chanfreinée vers les bandes d'insertion (5) et vers le bas, et un entraînement oméga à moteur électrique (19).

13. Machine de nettoyage de récipients (2) comprenant l'alimentation de récipients (1) selon au moins l'une quelconque des revendications précédentes.

14. Procédé pour amener des récipients (9) dans des voies d'alimentation (8) d'une alimentation de récipients (1) selon la revendication 1, en particulier d'une machine de nettoyage de récipients (2), dans lequel les récipients sont alimentés sur au moins une bande transporteuse (3) et poussent par l'intermédiaire d'une bande de transfert (4) parallèle à celle-ci sur une série de bandes d'insertion (5) adjacentes orthogonalement, au-dessus desquelles sont agencés des guides de récipient (6, 7) pour délimiter les voies d'insertion (8) les unes des autres, dans lequel au moins certains des guides de récipient (6) s'étendent à partir du côté de l'entrée jusqu'à/dans une zone de transmission (11) entre la bande de transfert (4) et les bandes d'insertion (5), et dans lequel la bande de transfert (4) s'étend dans un fonctionnement de poussée normal dans une direction de transport (4a) opposée à la direction d'amenée (3a) de la bande transporteuse (3), et dans lequel le fonctionnement de poussée est interrompu par des phases de relâchement dans lesquelles la direction de transport (4a) est respectivement inversée au moins une fois.

15. Procédé selon la revendication 14, dans lequel la direction de transport (4a) est respectivement répétée et en particulier inversée de manière oscillante dans les phases de relâchement.

16. Procédé selon la revendication 14 ou 15, dans lequel les phases de relâchement sont déclenchées par serrage de récipients (9) sur les guides de récipients (6, 7) détecté de manière sensorielle.

17. Procédé selon l'une quelconque des revendications 14 à 16, dans lequel les phases de relâchement sont insérées automatiquement dans le fonctionnement de poussée à des intervalles de temps prédéterminés, en particulier comprenant une durée relative des phases d'assouplissement de 1 à 20 %.
